# EUROPEAN PATENT APPLICATION

(11) **EP 4 047 868 A1**
(43) Date of publication of application: **24.08.2022**
(21) Application number: 22157393.4
(22) Date of filing: 18.02.2022
(51) Int. Cl.: H04L 9/40, G06F 21/33, G06F 16/955

(54) **METHOD FOR USING NFC ENABLED WALLET PASSES AS MOBILE CREDENTIALS AND A CONVENIENT WAY TO CREATE AND DISTRIBUTE THOSE**

(30) Priority: 19.02.2021 EP 21158151
(71) Applicant: ELATEC GmbH, 82178 Puchheim (DE)
(72) Inventor: Samson, Dominik, 82024 Taufkirchen (DE); Naibero, Antonio, 53797 Lohmar (DE); Wichmann, Oliver, 47506 Neukirchen-Vluyn (DE)
(74) Representative: Lohr, Jöstingmeier & Partner

(57) **Abstract**

A method of using NFC enabled wallet passes as mobile credentials include the steps of: executed by a computer device (110) including the steps of: selecting a first dataset from a user database,
reading a user's address from the first dataset of the user database, generating an ID and creating a wallet pass with the key in the wallet pass, sending a message to the address, the message including a one-time link to the wallet pass, and writing the key to an authentication database.

## Description

### Field of the invention

The invention relates to a device and a method of assigning mobile credentials to a plurality of persons.

### Description of the related art

Today, most companies use RFID (Radio Frequency Identification) badges for authentication of their employees. This may for example give physical access control to access a building. In another application, this may be used for secure print release. Secure print release, also pull printing, means that a print-job at a printer is only started when an employee proves physical presence. Mostly this is by presenting a RFID card to a RFID card reader at a printer. This may avoid that a sensitive document remains unattended in the outbox of a printer, accessible for unauthorized persons.

However, more and more users want to use the mobile phone as their "badge". And most phones do have NFC (Near Field Communication) or BLE (Bluetooth Low Energy) capabilities and thus can act as mobile, RFID like, badge.

An access system using mobile credentials is disclosed in US 2020/0320808 A1. A mobile device has to contact a server, requesting access to a designated facility. This has to be confirmed by a site admin. After that a user profile is generated an the user receives a notification about granted access. Finally, credentials are transferred to the user's mobile device. This is a complex process requiring multiple stages of interaction. Further, an app is required on the mobile device to control communication.

### Summary of the invention

The problem to be solved by the invention is providing an easy way to assign mobile credentials to a plurality of persons which may e.g. be employees of a company.

Solutions of the problem are described in the independent claims. The dependent claims relate to further improvements of the invention.

The embodiments provide a method to assign mobile credentials to users without having them install any app nor entering any password in an app nor doing some form of self-registration.

In an embodiment, a Pass Deployment Center (PDC) is a computer or a plurality of computers running a software service. This service can be provided via a Microsoft Azure or Amazon AWS platform for example.. The PDC is configured to provide a specific NFC (Near Field Communication) enabled pass being compatible with wallet apps on mobile devices or mobile phones. Such wallet apps are available on most mobile phones, e.g. Android phones, iPhones and Huawei phones and other mobile devices. Wallet apps are often provided by the phone manufacturer and pre-installed, such that a user normally does not have to install such a wallet app or any further app to use the pass. The pass may also be called a wallet pass. Therefore, an easy way is provided to assign mobile credentials to a plurality of persons.

The PDC may be connected to a user database, which may be a central user database, e.g., a secure print release app server (or any other location where the respective user data is stored, e.g., LDAP or active directory etc.). The PDC may also include a user database, which may be synchronized with a central user database.

To start or trigger an initialization, the PDC may be configured to read data of a selected plurality of users (which may include all users) including their email addresses from the user database. The PDC is further configured to generate at least one individual wallet pass for each of the plurality of users. Each wallet pass including at least an ID (Identifier) which may be a payload of the pass, which may further be an UUID (Universally Unique Identifier). The PDC may be configured to send individual E-mails to each user, each E-Mail including a link to the individual wallet pass of the respective user. Further, the PDC is configured to registers the ID of each of the wallet passes to an authentication database. The authentication database may be a separate database or may be part of the user database. Therefore, the authentication database includes the ID as a second identifier for each of the users. This step of registration may take place after generation of the wallet pass or after the initialization has been completed by a user.

Initialization may be done by means of an E-mail sent by the PDC to a user's mobile device. Instead of an E-Mai, a text message, a SMS or any other electronic message may be used.

Alternatively, the link can also be provided to the user via a QR code. Even a QR code can be used to guide the user to a website, where he has to enter his pass data and then he is sent the real pass with those data inside to the phone (we call it "on the fly pass generation". That is especially useful for e.g. bike rental, where a user first needs to do a self-registration to a system before he gets a pass to unlick a bike). The E-mail or a link in the E-mail is configured to download the wallet pass and to add the wallet pass to the wallet app of the mobile device. All the user needs to do is to click on the E-mail or a link in the E-mail that he gets, and the wallet pass is automatically added to the wallet in the phone. To increase security, the website that pops up after clicking the link (from the email) may be configured to ask the user for a further authentication step which may include a PIN, e.g. a unique PIN or a company PIN before the download starts. Such a further authentication request may also be issued by the PDC. After initialization has been completed, the wallet pass is ready for user authentication.

For user authentication, a selected wallet pass on a mobile device triggers sending the ID of the wallet pass to a secured device, the user wants to use (e.g. open a door, print at a printer, unlock a bike). The secured device is configured to receive the ID and to verify this ID either with the PDC or with the authentication database. Further parameters about specific access rights may be passed to the secured device. If the PDC or the authentication database verifies access rights, the user may access the secured device.

So, if an end-user with the phone goes to e.g., a printer, the key is already registered and the right print job is released - no action is needed at user side.

Below is a summary of the method steps:
a) a selecting a first dataset from a user database,
b) reading a user's address from the first dataset of the user database,
c) generating an ID,
d) creating a wallet pass with the ID in the wallet pass,
e) sending a message to the address, the message including a one-time link to the wallet pass, the link may be hashed and the link of a 2nd pass cannot be deducted in any way from the first link's structure.
f) writing the ID to an authentication database.
g) downloading the wallet pass into a mobile device,
h) the mobile device transmitting the ID of the wallet pass to a secured device,
i) the secured device forwarding the ID to the authentication database, and
j) retrieving authentication information from the authentication database by the secured device.

Step c) may take place any time before step d). Step f) may take place any time after steps a) and c) and preferably before step i).

A one-time link may be a link which can only be used once. After the link has been used, it may be cancelled. The one-time link may be a QR code, which may either directly point to the wallet pass or to a website providing the wallet pass. Or the link points to a website where the user needs to fill in the data for the pass first, and then it is automatically generated and can be downloaded "on the fly generation" of passes. This may be useful for systems where the user database is constantly growing through being publicly accessible, e.g. bike sharing.

The method described above is very convenient, as the user does not need to do any self-registration with this new mobile wallet pass at a secured device or at an authentication point (e.g., for secure print release with a print management software).

In an embodiment, instead of storing the created IDs in the secure print server, the PDC can also be used to distribute mobile credentials for other applications, like e.g. physical access. In such a case, the PDC stores the ID created by the physical access management database and assigns it there to the respective user. Instead of the ID any other suitable identificator may be used. E.g., a full emulation of traditional RFID cards like Mifare DESfire or HID SEOS could be realized in the wallet passes.

The process behind the idea: today's mobile credential systems all rely on an app the end-user needs to install. Also, on a credential that then needs to be assigned to that installation. The end-user needs to log-on to this with a username and password that the credentials system knows. This way it verifies which user is on which installation. E.g. even company Transact (considered a market leader in the field of NFC enabled Wallet passes) which uses NFC enabled Wallet passes relies on an installed app to securely identify an end-user through its log-in name and password before assigning the credentials to a user.

In an embodiment, the PDC creates a wallet pass with a unique ID number, which may e.g. be an UUID, (or any payload data) in the pass. A one-time link to this pass is send to the owner of an email address. Also, the number is added as a second identifier next to the ID that is already associated with the user in the local installation of the database, e.g., a secure print app.

Instead of the PDC reading and writing from the database, the respective operations can also be done with data export and import from e.g. a spreadsheet file. A spreadsheet or a list of created keys and the associated users can also be exported for import in the end-customer's data base.

Or, a predefined set of APIs could be used to interact with any 3^{rd} party SW installation that wants to make use of the PDC.

An embodiment includes a solution that works without the end-user needs to install anything on his phone. All he needs to do is clicking the link that gets him to the download of the NFC enables wallet pass. No password, no app installation. The process makes use of the natively installed Apple wallet (since iOS 6 pre-installed on every iPhone) and the Android Google pay and e.g., Gpay on Android based phones. Even the Huawei wallet or any other wallet can be used in a similar way, too.

The security of this download link may be increased if the customized link only points to an intermediate location where the user needs to enter a password or PIN that only matches this link. This password PIN is sent to the user in a different way than the link, e.g. via SMS. The PIN can be individual for every user, or can be globally set per company - this still ensures some kind of security but keeps convenience higher.

In an embodiment, the PDC may automatically write the ID it generates for the passes also into the database from where it got the users in the first place. It may do that by using APIs of the database. Doing so relieves the database owner of managing anything. Also, the end-user does not need to do some sort of self-registration, because the PDC already registers his ID number back to the database automatically.

In an embodiment, the system is designed to generate NFC enabled wallet passes (but not only, QR and bar code works, too. Also, just wallet pass files with payload data in it) for the Wallets of Apple, Android and Huawei phones.

In an embodiment, a cloud installation of a software, which may be the PDC can connect to a local installation of a database (e.g. of a print management software) and read the user entries. It does that by using the provided APIs of e.g., secure print SW providers.

The same applies also for providers of access control or time and attendance. In general, every application where it is required to assign a form of mobile credential in a convenient way can work like this.

In an embodiment, because the system relies on services from the Wallet OS system provider (e.g. Apple, Android or Huawei) it is best installed in a cloud. However, also local installations of the systems are possible. For example on a print server or any other platform in the company network.

In an embodiment, instead of the cloud making a connection to the secured device, a separate authentication device may be used. It may be a small PC with the respective software. The separate authentication device is inside the user's network and may make a data connection to the database or a secure print server or any other location where the respective user data is stored. Then, it can also make a connection to the outside PDC cloud. Once the connection is established, the data to and from the PDC are transmitted via the separate authentication device. This is advantageous due to security reasons: in many (company) networks incoming connection requests are blocked by the firewall, whereas establishing a connection first form the separate authentication device inside the network to the cloud and then using the other direction is allowed.

In an embodiment, wallet passes with NFC function and an IDs according to RFC 4122 UUIDs standard are created.

Optionally, instead of an UUID, an UID may be generated based on a specific algorithm that includes 3 sections: a customer code, an incremental number and a random number. This combination ensures that no UID is generated twice (due to the incremental number, each wallet pass at least differs in this number).

In an embodiment, the PDC may also read the IDs, e.g. UUIDs already stored in the authentication database and copy the ID numbers into the wallet passes it creates.

In an embodiment, any form of payload (or string) may be entered in the wallet passes (e.g. by entering the payload manually in a field). Limited by:

| | |
|---|---|
| Platform | Data / ID / Payload length |
| Apple Wallet VAS Pass | 64 Bytes max |
| Google Pay for Passes | N/A, max 1800 Bytes JWT, including payload |

In an embodiment, the public-private key pair for the NFC encryption of the Wallet passes can be set individually by each user and the private key can be copied to be entered in the respective RFID reader to read the wallet passes later. The user may upload its own certificates to sign the wallet passes.

In an embodiment, the wallet passes are provided to the user via an email with a plurality of download links, which provide wallet passes adapted for specific mobile devices. For example, there may be 2 download links in it: one to an Android pass, and one to an Apple pass. (optionally also with a 3^{rd}: for am Huawei pass).

In an embodiment, once the link has been clicked and the wallet pass was downloaded, the link will be broken and does not work anymore for security reasons. Also, the unused link to the respective other OS may be voided. Also, the link may be configured to work until the pass reports to its host system PDC (100) via the phone that it is successfully installed. Only then the host system PDC (100) breaks the download link.

In most cases, there is no dedicated app or user account needed to add the wallet pass to the wallet - the wallet is a native element of the phone OS. Thus, this provides a very convenient solution to realize a unique ID that is known to the system without installing an app to the phone or managing usernames and passwords.

In an embodiment, all wallet passes sent by the PDC are configured in a way that the phone OS restricts forwarding the wallet pass from the phone to other users.

In an embodiment, the system provides APIs to an external system, so that external applications (for other use cases next to a print management software for example) can control the PDC and generate (NFC enabled) wallet passes automatically themself by controlling the APIs (APIs may at least include one or more of: input data (name, email, optionally ID number, layout design selected), generate pass, send pass link by email, provide pass custom link, provide ID from the generated pass, resend pass, send information about generated and downloaded passes).

In an embodiment, the emails that are sent out from the PDC can be sent via the PDC email server or via a customer email-address that the customer provides. The PDC may connect to it and send emails via that server, too. Also, the Email text may be tailored by the PDC automatically to the receiver. E.g., the receiver's name may be changed automatically if the PDC has the name that belongs to an email address.

In an embodiment, to solve the problem to avoid that the user needs to log himself in (and authenticate himself if there is an app used to act as mobile credential) is providing an individual app with a unique, predefined ID inside to the user. This can be achieved if the PDC creates an individual compilation of a mobile credential app for each user, and thus knows about the ID of that compilation. And it also knows to which email-address the respective link was send. However, that only works with Android and Huawei phones where the PDC could send links to installable ^{∗}.apk files.

For Apple phones, apps can only be installed through the Appstore - and it is not allowed to upload an individual app for every user in addition to the time delay between app upload and availability in the Appstore (and everybody could download that app as well). If Apple would allow 3^{rd} party installations outsides its app store in the future, that may also be possible for Apple phones.

In an embodiment, another, similar solution that leverages wallet passes but not NFC enabled wallet passes (e.g. bar code or QR code passes, or just any pass with data in it and unrestricted use by Android, Huawei and Apple) relies on one app. The app needs to be installed on the phone, e.g. similarly to the Elatec^{®} mobile badge app. But now, the app can also scan for matching passes in the phones wallet. If it finds a matching wallet pass, the app will use that passes' ID for its ID, too .

Optionally, based on the idea to use an BLE app to transmit an ID (for example in case Apple remains with its strict use case restrictions on NFC wallet passes as of today) the combination with wallet passes can be expanded by at least one of or both:
i. if the phone detects a certain string in the pass, e.g., beginning with "NFC", the range of the BLE connection in the phone is set accordingly to a narrow range (in this case to a few centimeters only, to mimic NFC)
ii. also, the reader may be able to adjust its behavior depending on the UUID it gets from the app. E.g. if is contains a specific identifier (e.g. "NFC") e.g. in the beginning, it only accepts connections from a short distance (this may be triggered via pre-set values for the RSSI value in the reader for example)

Obviously, the same can be used for large distances, e.g. be using a specific identifier, e.g. "RNG" (for "range") e.g. as a beginning in the string.

Optionally, this may allow to build a system using NFC passes on Android & Huawei phones (e.g. via Google Smart Tap), and that eliminates the huge differences in available BLE chips in Android devices. On the same time, it eliminates the restriction that NFC on Apple phones cannot be used due to Apple's restrictive NFC usage policies. But Apple BLE performance is very constant through all its phones, and also there are only about 15 iPhone types which easily can be tested and the right parameter can be stored in e.g., a look-up table of the app for each phone.

Optionally, such a system can also be used on Android phones.

The method creates convenience on the end-user side because no need to install anything. Also characterized by the option that the link only leads to an intermediate address, where the end-user needs to enter an individual PIN that he got via a 2^{nd} way of communication (e.g. text message). Only after entering that he gets to the download of the pass.

The embodiments disclosed in here may also be applied for general distribution of passes and is not limited to printing.

In an embodiment, this idea may allow the use of wallet passes for easy distribution of IDs and only requires the user to install a generic app without username and password. This keeps user convenience high, and security as well.

In an embodiment, the process of using a wallet pass may be used as a kind of "proof of creditworthiness". Nowadays, a customer who wants to purchase something from a merchant provides the risk of not paying his rate it he buys on credit. Thus, if the merchant wants to sell something, he usually does a check for creditworthiness of the potential customer. This costs time and money.

However, the process can be reversed, by having the customer already bringing a kind of certificate when requesting to buy something on credit (e.g. that principle is already existing when applying for a rental apartment in Germany). Yet, every paper based certificate is subject to become outdated. Even a link to an online file (e.g. a pdf) is at least inconvenient.
a. An embodiment relates to provide a certificate in a wallet pass format. These passes can be easily found on the phones because passes are very well structured and convenient to use. Also, the pass can be updated by the provider when something changes or just to provide the most updated time-stamp on a pass before presenting it to the merchant.
b. In an embodiment, if the "creditworthiness pass" is NFC enabled, it can be easily presented to a RFID reader station at the merchant (e.g. in a supermarket counter when buying a new subscription to a mobile phone contract), and the system automatically can verify the genuineness of the certificate, and also the content and automatically verify the creditworthiness of the potential customer.

This may also work with barcode and QR code, but NFC is much more convenient.

### Description of Drawings

In the following the invention will be described by way of example, without limitation of the general inventive concept, on examples of embodiment with reference to the drawings.
Figure 1 shows an exemplary embodiment.
Figure 2 shows a method of authentication in more detail.
Figure 3 shows a flowchart with more details.

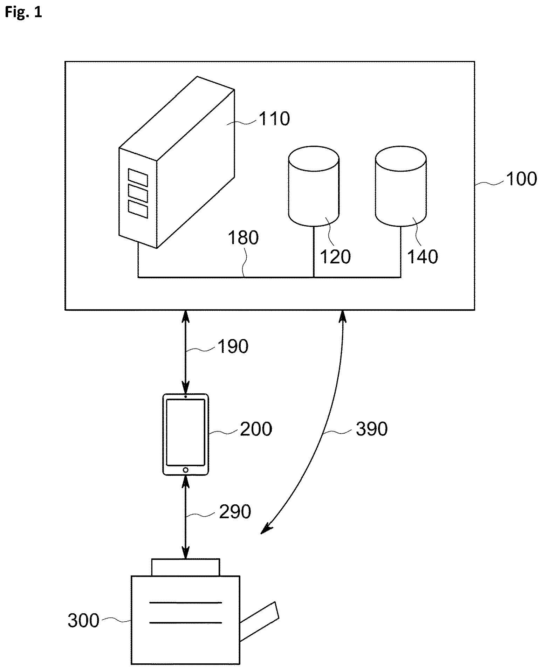

Figure 1 shows an exemplary embodiment. A computer device 110 is connected to a user database 120, for example, by a network 180. The computer device 110 may further be connected to an authentication database 140. The computer device can also be a cloud offering and is the Pass Deployment Center 100. In an embodiment, the PDC is separate from the user database and/or the authentication database, but may communicate with the user database and/or the authentication database. Basically, the PDC may be a software being executed on a computer.

A mobile device 200, which may be a cell phone, a laptop, or any other mobile device, may access via a mobile network 190 at least one of the computer device 110/100.

A secured device 300, which may be a printer, a door or any other securable device, may communicate with the mobile device 200 via a wireless network or data link, which may be NFC. It may further communicate with the user database 120 and/or the authentication database 140.

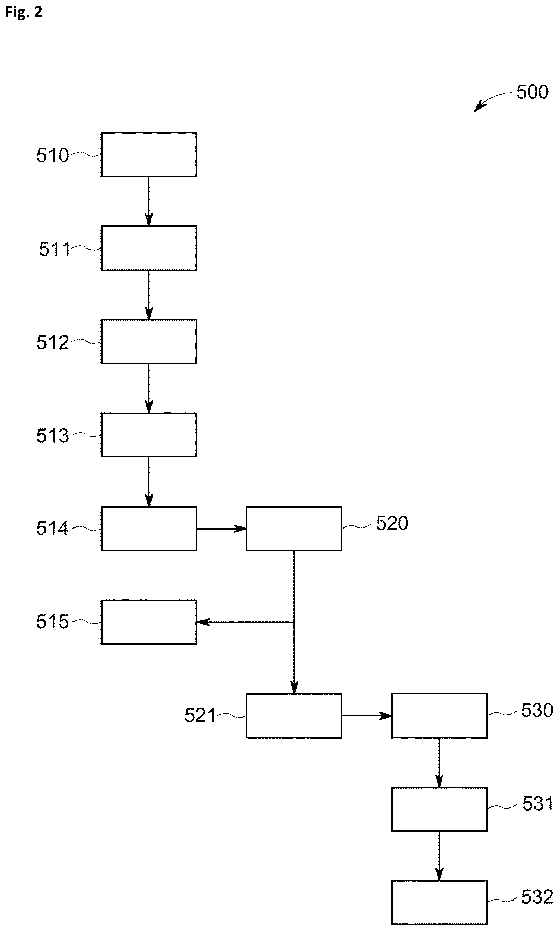

Figure 2 shows a method of authentication in more detail in a flow diagram 500.

In a first step 510, a computer device 110 selects a first dataset 450 from the user database 120.

In the next step 511, the computer device 110 reads a user's address 460 from the first dataset 450 of the user database 120. Such a user's address may be an E-mail address, a phone number, a messenger ID or any other address, which may be used in a later step to communicate with a mobile device of the user.

In the third step 512, an ID/key 420 is generated by the computer device 110. This ID may be a UUID (Unique User Identification) or any other suitable ID. Preferably, the ID is unique. The ID may contain additional user information.

In the fourth step 513, a wallet pass 410 is generated, which includes the ID 420. A wallet pass may be in general a pass, which may be used by a mobile device, e.g., for identification or other purposes. Most mobile devices include a pass app, which accepts and stores such wallet passes. The wallet pass may be specific for specific types of mobile device. If, for example, in a specific company only a specific type of mobile devices are admitted, the wallet pass may be of a type accepted by these mobile devices. Further, the type of mobile device may be stored in a database such that it is known, which mobile device is owned by each user and the pass may be adapted accordingly. In another embodiment, a bundle of passes for a selection of mobile devices may be generated, such that a mobile device may select an appropriate pass.

In the next step 514, a message is sent to the mobile device of the user. The message includes a link, which allows access and/or download of the wallet pass. The link may be a one-time link, which may only be used once. This increases security, as the pass cannot be downloaded or used multiple times. For the same security reason, the pass is not attached to the message itself. This prevents further distribution of the pass by distributing the message.

The next step 520 is performed by the mobile device and may be triggered by a user. The mobile device downloads the wallet pass 410 and stores the wallet pass 410 in its internal wallet app. The user may be requested for a further confirmation before doing this. A user may also be requested to perform an additional authentication, for example, by entering a PIN number or any other code.

After the wallet pass has been downloaded, the link may be invalidated such that further access to the link would at least not allow to access the wallet pass. Instead, an error message may be generated. Further, the ID 420 may be stored in an authentication database 140. The authentication database 140 stores the generated IDs for later access by secure devices. The authentication database 140 may also be part of the user database 120. Further, an ID 420 may be stored together with or even in the user records of the user database. Separating the user database and the authentication database would increase security, as neither the mobile device 200 nor the secured device 300 need to access any user data. They only need authentication data. Basically, the ID may be stored in the authentication database after it has been downloaded by a user. It may also be acceptable to store the ID in the authentication database at any time between generation of the ID and download by the user. Waiting for the download of an ID prevents the collection of unused IDs in the authentication database.

In another step 521, an ID is transmitted to a secured device. This may happen, if a mobile device is brought into proximity of a secured device. The communication of the ID may be done automatically, when the devices are in a distance, which allows a radio or wireless communication. The ID transmittal may also be triggered by a user.

In step 530, the secured device transfers the ID received by the mobile device to the authentication database for verification.

In step 531, the secured device reads from the authentication database authentication data. Such data may contain, for example, an access permission, an access denial or detailed access information. If, for example, the secured device is a printer, an authentication information may grant full printing access, it may deny access to the printer at all, or it may permit printing certain documents.

In the last step 532, the authenticated action is performed by the secured device. In the case of a printer, the printer is now printing the documents for which it is authenticated.

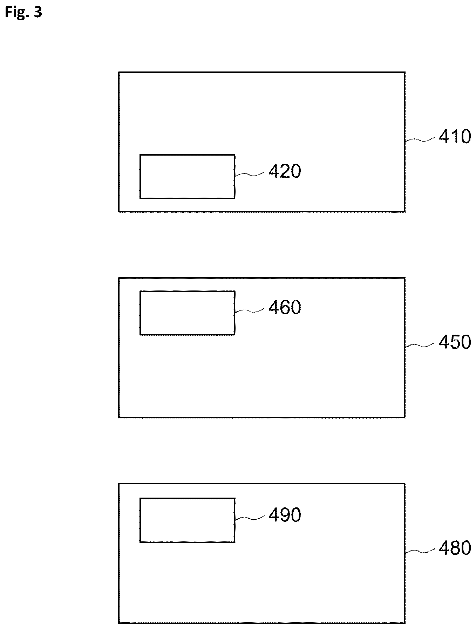

Figure 3 shows schematically different components. A wallet pass 410 may include an ID 420. A dataset 450 may include an address 460 and a message 480 may include a one-time link 490.

### List of reference numerals

- 100: Pass Deployment Center (PDC)
- 110: computer device
- 120: user database
- 140: authentication database
- 180: network
- 190: mobile network
- 200: mobile device
- 290: NFC
- 300: secured device
- 390: internal network
- 410: wallet pass
- 420: ID/key
- 450: dataset
- 460: address
- 480: message
- 490: one-time link
- 500: method flow
- 510: selection of first dataset from database
- 511: reading a user's address from the first dataset
- 512: generating an ID
- 513: generating a wallet pass
- 514: sending a message to the address
- 515: writing the ID to the database
- 520: downloading the wallet pass into a mobile device
- 521: transmitting the ID of the wallet pass to a secured device
- 530: forwarding the ID to the database
- 531: retrieving authentication information from the database
- 532: performing an authenticated action

## Claims

1. A method executed by a computer device (110) including the steps of:
a) a selecting a first dataset (450) from a user database (120),
b) reading a user's address (460) from the first dataset (450) of the user database (120),
c) generating an ID (420),
d) creating a wallet pass (410) with the ID (420) in the wallet pass (410),
e) sending a message (480) to the address (460), the message including a one-time link (490) to the wallet pass (410).
f) writing the ID (420) to an authentication database (140).

2. The method according to any of the previous claims,
further including the steps of
g) downloading the wallet pass (410) into a mobile device (200),
h) the mobile device (200) transmitting the ID (420) of the wallet pass to a secured device (300),
i) the secured device (300) forwarding the ID (420) to the authentication database (140), and
j) retrieving authentication information from the authentication database (140) by the secured device (300).

3. The method according to any of the previous claims,
**characterized in, that**
step f) includes writing the ID (420) to the first dataset (450).

4. The method according to any of the previous claims,
**characterized in, that**
step f) includes writing the ID (420) to the authentication database (140) only after the wallet pass (410) has been downloaded by use of the one-time link (490), and
wherein the one-time link (490) may be configured to stop working once the pass is downloaded one time, or the link is configured to work until the pass reports to its host system PDC (100) via the phone that it is successfully installed.

5. The method according to any of the previous claims,
**characterized in, that**
step e.1) after step e) includes querying a pin or password before enabling a download of the wallet pass via the link (490), wherein the link may be hashed.

6. The method according to any of the previous claims,
wherein step c) may be at any position before step d).

7. The method according to any of the previous claims,
wherein step f) may be at any position after steps a) and c).

8. The method according to any of the previous claims,
**characterized in, that**
the address (460) includes at least one of an E-mail address or mobile phone number and/or the message (480) includes at least one of an E-Mail, a messenger message or a SMS.

9. A computer device (110) configured to
- select a first dataset (450) from a user database (120),
- read a user's address (460) from the first dataset of the user database (120),
- create a wallet pass (410) with an ID (420) in the wallet pass,
- send an E-mail to the email address, the E-mail or SMS including a one-time link to the wallet pass and
- write the ID (420) to an authentication database (140).

10. The computer device or the method according to any of the previous claims,
**characterized in, that**
the ID (420) is a UUID or any predefined string or number combination.

11. The computer device or the method according to any of the previous claims,
**characterized in, that**
wherein the authentication database (140) is part of the user database (120).

12. The computer device or the method according to any of the previous claims,
**characterized in, that** the one-time link (490) is a QR code, which directly points to at least one of:
the wallet pass (410),
a website providing the wallet pass (410), and
a website providing a user fillable form which generates the wallet pass based on data filled in by a user.

13. A mobile device configured to
- download the wallet pass generated by the computer device of any of claim 9 to 12, by using the one-time link,
- transmit the ID (420) of the wallet pass to a secured device.

14. A secured device configured to
- receive the ID (420) of the wallet pass,
- forward ID (420) to the authentication database (140), and
- retrieve authentication information from the authentication database (140).

15. A system including at least one computer device according to any of claims 9 to 12, at least one mobile device according to claim 13, and at least one secured device according to claim 14.
